# FASCICULE DE BREVET EUROPEEN

(11) **EP 2 926 110 B1**
(45) Date de publication et mention de la délivrance du brevet: **11.01.2017**
(21) Numéro de dépôt: 13802559.8
(22) Date de dépôt: 26.11.2013
(51) Int. Cl.: G01N 1/40, G01N 1/30

(54) **PROCÉDÉ DE FORMATION D'UN FILM LIQUIDE SUR UN SUPPORT**
VERFAHREN ZUR BILDUNG EINES FLÜSSIGKEITSFILMS AUF EINEM SUBSTRAT
METHOD FOR FORMING A LIQUID FILM ON A SUBSTRATE

(30) Priorité: 27.11.2012 FR 1261282
(43) Date de publication de la demande: 07.10.2015
(73) Titulaire: Commissariat à l'Energie Atomique et aux Energies Alternatives, 75015 Paris (FR)
(72) Inventeur: HENNEQUIN, Yves, NL-1056 SX Amsterdam (NL)
(74) Mandataire: Lavoix
(86) Numéro de dépôt international: PCT/EP2013/074750
(87) Numéro de publication internationale: WO 2014/083000

(56) Documents cités:
- WO-A1-2011/045360
- FR-A1- 2 943 785
- MAINAK MAJUMDER ET AL: "Overcoming the "Coffee-Stain" Effect by Compositional Marangoni-Flow-Assisted Drop-Drying", THE JOURNAL OF PHYSICAL CHEMISTRY B, vol. 116, no. 22, 7 juin 2012 (2012-06-07) , pages 6536-6542, XP055080960, ISSN: 1520-6106, DOI: 10.1021/jp3009628 cité dans la demande

## Description

La présente invention concerne un procédé de formation d'un film liquide sur un support. Le procédé de formation comprend les étapes suivantes :
- le placement du support dans une enceinte, et le dépôt d'une composition sur le support, la composition comportant de l'eau,
- l'introduction d'un liquide volatile dans l'enceinte, et
- la fermeture de l'enceinte pendant une durée prédéterminée, le liquide volatile s'évaporant dans l'enceinte lors de cette étape de fermeture.

L'invention s'applique en particulier à la détection de particules de taille micrométrique et sub-micrométrique, notamment des particules biologiques, telles que des cellules, des bactéries, ou encore des virus. L'invention s'applique également à la détection de particules en forme de microbilles. La composition comporte alors lesdites particules à détecter, et le support est une lame transparente, la lame transparente étant destinée à être éclairée par une source lumineuse, en vue de l'acquisition à l'aide d'un système de détection optique d'au moins une image de la composition comprenant les particules.

Afin d'acquérir des images de ces particules avec un capteur d'images de grande taille, c'est-à-dire un capteur présentant une aire de quelques cm², voire de quelques dizaines de cm², il convient d'étaler au mieux la composition sur la lame transparente, pour former un film de faible épaisseur et d'aire équivalente à celle du capteur d'images. Par faible épaisseur, on entend une épaisseur de valeur inférieure à 500 µm,de préférence comprise entre 50 µm et 200 µm.

Une première technique, dite de dépôt à la tournette (de l'anglais *spin coating*), consiste à déposer la composition sur le support et à faire subir une rotation au support, afin d'étaler la composition sur le support par l'action de la force centrifuge. Toutefois, cette première technique est complexe à mettre en oeuvre, l'étalement de la composition étant relativement difficile à maîtriser. En outre, lorsque la composition comporte des bactéries, l'introduction de la composition dans un dispositif propre à mettre en oeuvre cette technique est susceptible de contaminer la composition.

Une deuxième technique, dite de trempage du support (de l'anglais *dip coating*), consiste à tremper le support dans un réservoir comportant la composition, puis de retirer doucement le support de ce réservoir. Un film de cette composition se forme alors à la surface du support. Toutefois, cela nécessite un volume important de ladite composition, typiquement de plusieurs dizaines de µL, et un tel volume n'est pas forcément disponible.

Une troisième technique est décrite dans l'article intitulé « Overcoming the coffre-stain' effect by compositional Marangoni-flow-assisted drop-drying » de Majumder et al, publié dans 'The Journal of Physical Chemistry' en 2012. Cette troisième technique consiste à déposer une goutte d'eau sur un support en Teflon, et à placer ce support dans une atmosphère saturée en éthanol, par exemple à l'intérieur d'une boîte de Petri. La goutte s'étale alors sur le support au fur et à mesure de la présence du support dans l'atmosphère saturée en éthanol. Le support doit être placé dans cette atmosphère saturée en éthanol pendant une durée de l'ordre de 1000 secondes, afin d'observer un étalement correct de la goutte.

Toutefois, cet étalement de la goutte n'est pas optimal, et nécessite une quantité relativement importante de la composition afin d'obtenir un film présentant une aire de quelques cm², voire de quelques dizaines de cm².

Le but de l'invention est donc de proposer un procédé de formation d'un film liquide sur un support, le film étant formé par étalement d'une composition, le procédé permettant d'améliorer l'étalement de la composition sur le support.

A cet effet, l'invention a pour objet un procédé du type précité, dans lequel le procédé comprend en outre l'extraction, en dehors de l'enceinte, au moins partiellement de la vapeur formée par l'évaporation du liquide volatile, cette extraction produisant un étalement de la composition sur le support, ladite composition étalée formant alors le film liquide sur le support.

À la différence du procédé de l'état de la technique correspondant à la troisième technique, l'étalement de la composition n'est, selon l'invention, pas observé pendant l'étape de fermeture hermétique de l'enceinte, c'est-à-dire pendant l'évaporation du liquide volatile à l'intérieur de l'enceinte, mais seulement à partir du moment où la vapeur formée par l'évaporation du liquide volatile est extraite au moins partiellement en dehors de l'enceinte.

Suivant d'autres aspects avantageux de l'invention, le procédé comprend une ou plusieurs des caractéristiques suivantes, prises isolément ou suivant toutes les combinaisons techniquement possibles :
- la durée prédéterminée présente une valeur comprise entre 1 minute et 30 minutes, de préférence comprise entre 5 minutes et 20 minutes, de préférence encore sensiblement égale à 10 minutes ;
- lors de l'introduction du liquide volatile, le liquide volatile est disposé à l'écart de la composition, en l'absence d'un contact entre le liquide volatile et la composition ;
- le liquide volatile introduit dans l'enceinte comporte un alcool, tel que de l'éthanol ;
- l'enceinte est une boîte, telle qu'une boîte de Petri, la boîte comportant un couvercle et un réceptacle présentant une ouverture, le couvercle étant mobile entre une position ouverte dans laquelle le couvercle est à l'écart de l'ouverture du réceptacle et une position fermée dans laquelle le couvercle est propre à obturer l'ouverture du réceptacle, ladite position fermée correspondant à une fermeture hermétique de la boîte, et lors de l'étape de fermeture, le couvercle est déplacé de sa position ouverte vers sa position fermée, puis maintenu en position fermée pendant la durée prédéterminée, et lors de l'étape d'extraction, le couvercle est déplacé de sa position fermée vers sa position ouverte, puis maintenu en position ouverte ;
- le réceptacle comporte un fond, le liquide volatile est disposé contre le fond lors de l'étape d'introduction, et la boite comporte en outre au moins une cale de maintien du support à l'écart du fond, afin de disposer le liquide volatile à l'écart de la composition lors de l'étape d'introduction ;
- la composition comprend en outre des particules, un surfactant et un polymère hydrophile, les particules présentant un diamètre de préférence inférieur à 10 µm, de préférence encore inférieur à 1 µm, le surfactant présentant une concentration de préférence au moins égale à la concentration micellaire critique, et le polymère hydrophile présentant une température d'ébullition supérieure à celle de l'eau, le polymère étant de préférence un polyéthylène glycol défini par la formule suivante : H(-OCH₂ CH₂-)ₙOH, où n représente le nombre de motif(s) d'oxyéthylène du polymère ;
- la composition présente un volume de valeur comprise entre 0,5 µL et 5 µL ;
- le support est réalisé en un matériau hydrophile, tel que du verre ou encore tel qu'un matériau plastique ;
- le support est une lame transparente, la lame transparente étant destinée à être éclairée par une source lumineuse, en vue de l'acquisition, à l'aide d'un système de détection optique, d'au moins une image de la composition comprenant des particules ; et
- la composition comprend en outre des particules, les particules étant des espèces biologiques, telles que des espèces biologiques vivantes, par exemple des bactéries.

Les caractéristiques et avantages de l'invention apparaîtront à la lecture de la description qui va suivre, donnée uniquement à titre d'exemple non limitatif, et faite en référence aux dessins annexés, sur lesquels :
- la figure 1 est une représentation schématique en coupe d'une enceinte en forme de boîte dans laquelle un liquide volatile est introduit après avoir déposé une composition sur un support placé dans cette enceinte,
- la figure 2 est un organigramme du procédé de formation du film selon l'invention, comprenant l'introduction du liquide volatile dans l'enceinte, la fermeture de l'enceinte pendant une durée prédéterminée, le liquide volatile s'évaporant dans l'enceinte lors de cette fermeture, et l'extraction en dehors de l'enceinte au moins partiellement de la vapeur formée par l'évaporation du liquide volatile,
- la figure 3 est une courbe représentant l'évolution du rayon de la composition en fonction du temps, à partir du moment où la vapeur formée par l'évaporation du liquide est extraite de l'enceinte, et
- la figure 4 est une représentation schématique d'un système de détection optique de particules, comprenant une source de lumière, le support en forme de lame transparente sur lequel est agencée la composition, et un dispositif d'acquisition d'images de la composition éclairée.

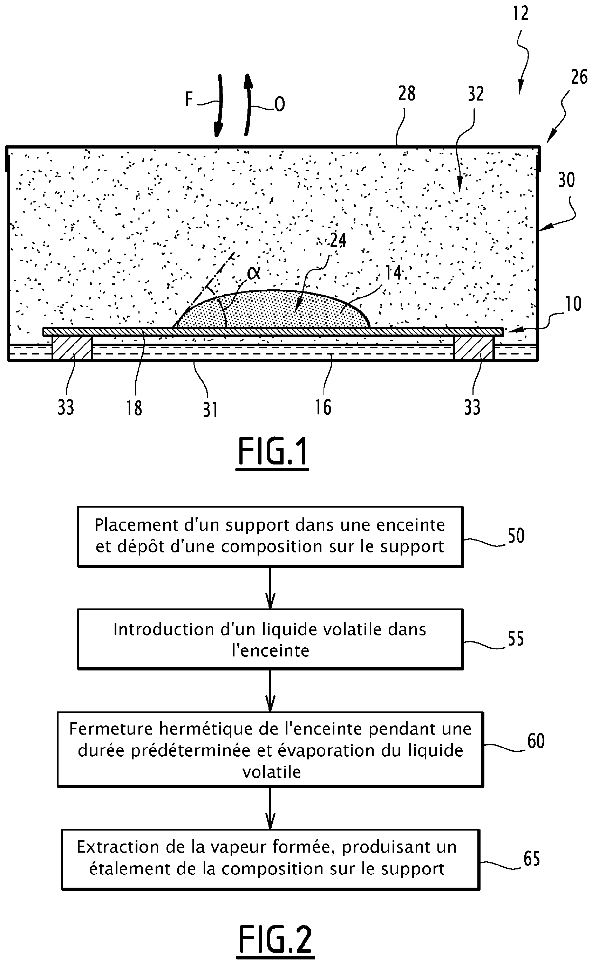

Sur la figure 1, un support 10 est placé dans une enceinte 12, et une composition 14 comportant de l'eau ainsi que des particules 24, est déposée sur le support 10. Un liquide volatile 16 est disposé dans l'enceinte 12, et l'enceinte 12 est fermée de manière hermétique, le liquide volatile 16 s'évaporant à l'intérieur de l'enceinte 12 lorsque celle-ci est fermée de manière hermétique.

Le support 10 est de préférence réalisé en un matériau hydrophile, tel que du verre ou encore tel qu'un matériau plastique rendu hydrophile.

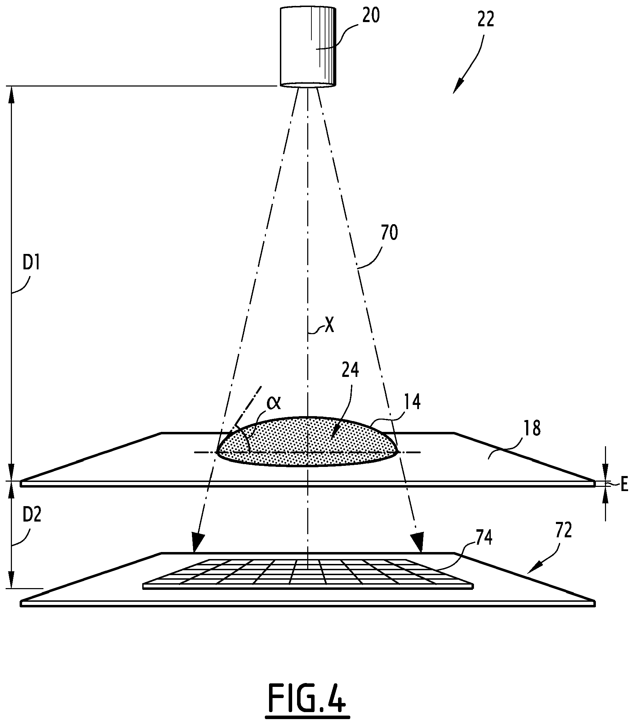

Le support 10 est, par exemple, en forme d'une lame transparente 18 destinée à être éclairée par une source lumineuse 20, en vue de l'acquisition, à l'aide d'un système de détection optique 22, d'au moins une image de la composition 14 comprenant les particules 24, comme représenté sur la figure 4.

L'enceinte 12 est, par exemple, une boîte 26, telle qu'une boîte de Petri, la boîte 26 comportant un couvercle 28 et un réceptacle 30 présentant un fond 31 et une ouverture 32. Le couvercle 28 est mobile entre une position ouverte dans laquelle le couvercle 28 est à l'écart de l'ouverture 32 du réceptacle et une position fermée dans laquelle le couvercle 28 est propre à obturer l'ouverture 32 du réceptacle, ladite position fermée correspondant à une fermeture hermétique de la boîte 26.

Dans l'exemple de réalisation de la figure 1, l'enceinte 12 est de forme cylindrique. L'enceinte 12 présente, par exemple, un diamètre d'environ 10 cm et une hauteur d'environ 1,5 cm.

En complément, l'enceinte 12 comporte au moins une cale 33 de maintien du support 10 à l'écart du fond 31 du réceptacle, afin de disposer le liquide volatile 16 à l'écart de la composition 14 lorsqu'il est introduit dans l'enceinte 12. Dans l'exemple de réalisation de la figure 1, l'enceinte 12 comporte deux cales de maintien 33.

La composition 14 comprend, par exemple, les particules à détecter 24 et une solution, la solution comportant de l'eau, un surfactant et, de préférence, un polymère hydrophile. Autrement dit, la composition 14 est une dispersion des particules à détecter 24 dans une solution aqueuse comprenant de l'eau, le surfactant et le polymère hydrophile.

Dans l'exemple de réalisation décrit, la solution de la composition 14 est constituée d'eau, du surfactant et du polymère hydrophile. La composition 14 est alors constituée des particules à détecter 24, d'eau, du surfactant et du polymère hydrophile.

La composition 14 présente un volume de valeur comprise entre 0,5 µL et 5 µL.

Le polymère hydrophile présente une température d'ébullition supérieure à celle de l'eau. Le polymère hydrophile est, par exemple, un polyéthylène glycol défini par la formule suivante :

H(-OCH₂CH₂-)ₙOH

où n représente le nombre de motif(s) d'oxyéthylène du polymère.

Le nombre n de motif(s) d'oxyéthylène est un nombre entier, de préférence compris entre 1 et 180, de préférence encore compris entre 4 et 16, de préférence encore égal à 13.

Le nombre n de motifs est, par exemple, égal à 2, et le polymère est alors appelé diéthylène glycol, également noté DiEG.

En variante, le nombre n de motifs d'oxyéthylène est égal à 13, et le polymère hydrophile est appelé polyéthylène glycol 600, également noté PEG 600, le PEG 600 présentant un poids moléculaire de l'ordre de 600 g/mol.

Lorsque le nombre n de motifs d'oxyéthylène est égal à 13, le polymère hydrophile, à savoir le PEG 600, présente une concentration massique de préférence comprise entre 0,2 % et 0,8 %, de préférence encore comprise entre 0,4 % et 0,6 %.

En variante encore, le nombre n de motifs d'oxyéthylène est égal à 180, et le polymère hydrophile est appelé polyéthylène glycol 8000, également noté PEG 8000, le PEG 8000 présentant un poids moléculaire sensiblement égal à 8000 g/mol.

Le surfactant, également appelé tensioactif, présente une concentration de préférence au moins égale à la concentration micellaire critique (CMC). Le surfactant comporte, par exemple, du polyoxyéthylène 20 sorbitan monolaurate, également connu sous le nom commercial TWEEN20.

En variante, le surfactant comporte un copolymère de polyoxyéthylène et de polyoxypropylène, tel qu'un poloxamère, par exemple celui connu sous le nom commercial PLURONIC F-68. En variante encore, le surfactant comporte du dodécylsulfate de sodium, également appelé SDS.

Le surfactant, éventuellement complété par le polymère hydrophile, est destiné à former un film recouvrant les particules 24 lors de l'évaporation de l'eau de la solution 14. L'adjonction de polymère hydrophile permet de prolonger la durée durant laquelle ce film recouvre les particules 24.

Le liquide volatile 16 disposé dans l'enceinte 12 comporte un alcool, tel que de l'éthanol. Dans l'exemple de réalisation décrit, le liquide volatile 16 est constitué de cet alcool, tel que l'éthanol.

En variante, le liquide volatile 16 est de l'isopropanol ou tout autre solvant volatil.

Le liquide volatile 16 préféré est toutefois l'éthanol, car il est adapté au cas où les particules 24 sont des espèces biologiques, et plus particulièrement des espèces biologiques vivantes, notamment les bactéries ou tout autre microorganisme. Dans ces conditions particulières, il est en effet préférable de disposer d'un liquide volatile 16 peu agressif vis-à-vis des espèces biologiques 24.

La lame transparente 18 présente une épaisseur E selon une direction longitudinale X correspondant à la direction d'éclairement de la composition 14 par la source lumineuse 20, comme représenté sur la figure 4. L'épaisseur E est, par exemple, de valeur comprise entre 10 µm et 100 µm, de préférence comprise entre 20 µm et 50 µm.

La lame 18 est de préférence hydrophile, afin qu'un angle de contact α, visible sur la figure 1, entre la composition 14 et la lame 18 présente une faible valeur. La valeur de l'angle de contact α obtenu entre la lame hydrophile 18 et la composition 14 est inférieure à 20°, de préférence inférieure à 10°, de préférence encore de l'ordre du degré.

Le caractère hydrophile de la lame 18 est, par exemple, obtenu en préparant la lame 18 selon les étapes suivantes. La première étape de préparation est une sonication dans une eau savonneuse pendant une durée de l'ordre de dix minutes. L'eau savonneuse comporte, par exemple, de l'eau et du liquide vaisselle, l'eau étant de préférence une eau pure de type 1 conforme à la norme ISO 3696, également connue sous le nom commercial de Mili-Q. La deuxième étape est une étape de rinçage à l'eau, telle qu'à l'eau Mili-Q, à l'acétone et à l'isopropanol. La troisième étape est une étape de séchage, par exemple de séchage à l'azote, et la quatrième étape est un passage au plasma oxygène pendant une durée supérieure à 15 secondes, de préférence de l'ordre de 30 secondes.

Le procédé de formation d'un film liquide sur le support 10, le film étant formé par étalement de la composition 14, va être à présent décrit à l'aide de la figure 2.

Lors de l'étape initiale 50, le support 10 est placé dans l'enceinte 12, et la composition 14 est déposée sur le support 10, la composition 14 comportant notamment de l'eau.

Le support 10, par exemple sous forme de la lame transparente 18, est de préférence agencé sur les cales de maintien 33, afin d'être disposé à l'écart du fond 31 du réceptacle de l'enceinte 12.

Le liquide volatile 16 est ensuite introduit dans l'enceinte 12, lors de l'étape 55. Le liquide volatile 16 est, par exemple, disposé contre le fond 31.

Lors de l'introduction du liquide volatile 16, celui-ci est disposé à l'écart de la composition 14. Lors de cette étape d'introduction, le liquide volatile 16 et la composition 14 ne sont alors pas au contact l'un de l'autre.

Lors de l'étape suivante 60, l'enceinte 12 est fermée de manière hermétique pendant une durée prédéterminée, le liquide volatile 16 s'évaporant alors dans l'enceinte 12 lors de cette étape de fermeture. Autrement dit, le support 10 est, lors de cette étape de fermeture, placé sous atmosphère du liquide volatile 16, par exemple sous atmosphère d'éthanol.

La durée prédéterminée présente une valeur comprise entre 1 minute et 30 minutes, de préférence comprise entre 5 minutes et 20 minutes, de préférence encore égale à 10 minutes à plus ou moins 1 minute.

Lorsque l'enceinte 12 est en forme de la boite 26 comportant le couvercle 28 et le réceptacle 30, le couvercle 28 est, lors de cette étape de fermeture 60, déplacé de sa position ouverte vers sa position fermée, comme représenté par la flèche F sur la figure 1, puis le couvercle 28 est maintenu en position fermée pendant la durée prédéterminée.

Enfin, lors de l'étape 65, après expiration de ladite durée prédéterminée, la vapeur formée par l'évaporation du liquide 16 est extraite au moins partiellement en dehors de l'enceinte 12. Cette extraction au moins partielle de la vapeur précédemment formée produit alors un étalement de la composition 14 sur le support 10, cette composition étalée 14 formant le film liquide sur le support 10.

Lorsque l'enceinte 12 est en forme de la boite 26 comportant le couvercle 28 et le réceptacle 30, le couvercle 28 est, lors de l'étape d'extraction 65, déplacé de sa position fermée vers sa position ouverte, comme représenté par la flèche O sur la figure 1, puis le couvercle 28 est maintenu en position ouverte.

La vapeur du liquide 16 étant confinée à l'intérieur de l'enceinte 12 lors de l'étape de fermeture 60, l'ouverture de la boite 26, par déplacement du couvercle 28 de sa position fermée à sa position ouverte (flèche O), provoque l'extraction au moins partielle de cette vapeur en dehors de l'enceinte 12.

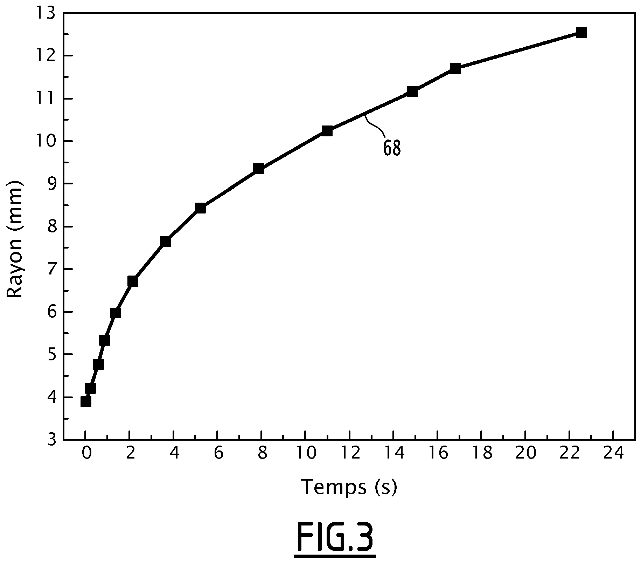

Sur la figure 3, la courbe 68 représente l'évolution, en fonction du temps, du rayon de la composition 14 dans un plan perpendiculaire à la direction longitudinale X, à partir du moment où la vapeur formée par l'évaporation du liquide est extraite de l'enceinte, c'est-à-dire à partir du début de l'étape 65.

La courbe 68 a été obtenue avec une lame de verre 18 rendue hydrophile de la manière décrite précédemment, pour une composition 14 présentant un volume d'environ 10 µL, et avec l'introduction d'environ 1mL d'éthanol dans l'enceinte 12 et une durée prédéterminée de 10 minutes pour l'étape de fermeture 60. La composition 14 a été préparée avec les proportions suivantes : pour un volume total d'un mL de la composition 14, 45 µL de surfactant TWEEN20 à 0,2% et 600 µL de PEG 600 de concentration massique égale à 0,5%.

La courbe 68 montre alors une évolution très rapide du rayon de la composition 14 en fonction du temps, c'est-à-dire un étalement très rapide de la composition 14 sur le support 10 à partir du moment où la vapeur formée par l'évaporation du liquide est extraite de l'enceinte. Dans l'exemple de la figure 3, la composition 14 présente initialement un rayon d'environ 4 mm, et la valeur du rayon est doublée en un peu plus de quatre secondes à partir du début de l'étape 65, la valeur du rayon étant triplée environ 18 secondes après le début de l'étape 65.

Ainsi, lorsque la durée prédéterminée de l'étape 60 est égale à 10 minutes, la valeur du rayon de la composition 14 est triplée en un peu plus de 10 minutes avec le procédé de formation selon l'invention, alors qu'avec le procédé de formation de l'état de la technique, le triplement de la valeur du rayon n'est obtenu au mieux qu'après environ 1500 secondes, soit 25 minutes.

Le procédé selon l'invention permet donc d'améliorer de manière importante l'étalement de la composition 14 sur le support 10.

Après la formation du film liquide sur le support 10 suivant le procédé selon l'invention, le film liquide est éclairé par la source de lumière 20 afin que les particules 24 soient détectées à l'aide du système de détection optique 22, visible sur la figure 4.

La source de lumière 20 est propre à émettre un faisceau lumineux 70 selon la direction longitudinale X, afin d'éclairer la composition 14 disposée sur la lame transparente 18.

La source de lumière 20 est disposée à une première distance D1 de la lame transparente 18 selon la direction longitudinale X. La première distance D1 présente, de préférence, une valeur comprise entre 1 cm et 30 cm, par exemple égale à 10 cm.

Dans l'exemple de réalisation de la figure 4, la source de lumière 20 est une source ponctuelle. La cohérence spatiale de la source de lumière 20 est en complément améliorée, par exemple en la couplant avec un sténopé, de diamètre compris entre 50 µm et 500 µm, placé au contact de la source 20.

La source de lumière 20 est, par exemple, une diode électroluminescente, également appelée LED (de l'anglais *Light Emitting Diode*), monochromatique et présentant des dimensions suffisamment réduites pour être considérée comme spatialement cohérente, le diamètre de la diode électrode luminescente étant inférieur au dixième de la première distance D1 séparant cette diode électroluminescente de la lame 18. La diode électroluminescente de la source de lumière 20 présente, par exemple, une longueur d'onde d'émission égale à 555 nm et une puissance égale 1,7 W.

En variante, la source de lumière 20 est une source spatialement ou temporellement cohérente, telle qu'une diode laser (DL) ou encore une diode laser de type VCSEL (de l'anglais *Vertical Cavity Surface Emitting Laser*).

Le système de détection optique 22 comprend la source de lumière 20, un dispositif 72 d'acquisition d'images, la lame transparente 18 et la composition 14 étalée sur la lame 18, la composition 14 comportant les particules à détecter 24.

Le système de détection 22 est destiné à détecter les particules 24, lors d'une évaporation de la composition 14, cette évaporation étant décorrélée de l'étalement, décrit précédemment, de la composition 14 sur la lame transparente 18.

Les particules à détecter 24 sont, par exemple, des particules biologiques, c'est-à-dire des cellules (par exemple des globules rouges, des globules blancs, ou des plaquettes), des composants cellulaires (par exemple des mitochondries), des bactéries, des virus ou encore tout autre molécule ou agrégats de molécule, notamment des agrégats de protéines.

En variante, les particules à détecter 24 sont des microbilles.

Les particules à détecter 24 présentent un diamètre de préférence inférieur à 1 µm, le diamètre des particules 24 étant par exemple compris entre 50 nm et 1 µm, de préférence encore compris entre 10 nm et 1 µm.

Le faisceau lumineux 70 est propre à éclairer directement la composition 14 disposée sur la lame transparente 18.

Le dispositif d'acquisition d'images 72 comprend un photodétecteur matriciel 74 comportant une pluralité de pixels, non représentés. Chaque pixel du photodétecteur 74 présente des dimensions inférieures ou égales à 10 µm, voire 4 µm. Chaque pixel est, par exemple, en forme d'un carré dont le côté est de valeur inférieure ou égale à 10 µm, voire à 4 µm. En variante, chaque pixel est en forme d'un carré de 2,2 µm de côté.

Le dispositif d'acquisition 72 est disposé à une deuxième distance D2 de la lame transparente 18 selon la direction longitudinale X. La deuxième distance D2 présente une valeur inférieure à 1 cm, et de préférence comprise entre 100 µm et 2 mm.

Dans l'exemple de réalisation de la figure 4, la deuxième distance D2 est égale à 500 µm. Le fait de privilégier une distance courte entre le dispositif d'acquisition 72 et la lame transparente 18 permet de limiter les phénomènes d'interférences entre différentes figures de diffraction lorsque la composition 14 est éclairée.

Le dispositif d'acquisition d'images 72 est propre à acquérir des images du rayonnement transmis par la lame 18 sur laquelle est agencée la composition 14 éclairée par le faisceau lumineux 70. Par rayonnement transmis, on entend le rayonnement traversant la composition 14 et la lame 18, de telle sorte que le dispositif d'acquisition 72 et la source de lumière 20 sont situés de part et d'autre de la lame transparente 18 et de la composition 14.

Le photodétecteur matriciel 74 est un capteur d'images en deux dimensions, à savoir dans un plan perpendiculaire à l'axe longitudinal X. Le photodétecteur matriciel 74 est un capteur d'image pixélisé, et par exemple un capteur CMOS (de l'anglais *Complementary Métal Oxyde Semi-conductor*).

En variante, le photodétecteur matriciel 74 est un capteur CCD (de l'anglais *Charged-Couple Device).*

Les images acquises par le photodétecteur matriciel 74 sont formées par le rayonnement transmis directement par la composition 14 éclairée, en l'absence d'une optique de grossissement disposée entre la lame transparente 18 et le photodétecteur matriciel 74. Cependant, cela n'exclut pas la présence de microlentilles, chacune étant couplée à un pixel correspondant du capteur, ces microlentilles permettant une meilleure collecte du signal. Le photodétecteur matriciel 74 est également appelé dispositif d'imagerie sans lentille, et est apte à former une image de la composition 14, tout en étant placé à une faible distance de cette dernière. Par faible distance, on entend une distance inférieure à 1 cm, la deuxième distance D2 étant par exemple de l'ordre de 500 µm.

Pour la détection optique des particules 24, des images successives de la composition 14 étalée en forme de film et contenant les particules 24 sont alors acquises à l'aide du système de détection optique 22. Lors de l'évaporation du film, on observe la formation d'une pellicule recouvrant les particules 24, la pellicule présentant une épaisseur très faible, telle qu'une épaisseur de valeur comprise entre 10 nm et 5 µm.

Lorsque la composition 14 est éclairée par la source de lumière 20 dans ces conditions, la pellicule joue alors le rôle d'une ou plusieurs microlentilles formées au-dessus des particules 24, ce qui permet d'améliorer la détection de ces particules.

L'ajout du polymère hydrophile dans la composition 14 permet de prolonger la durée pendant laquelle la pellicule subsiste au contact des particules 24 lors de l'évaporation de la composition 14. Le polymère hydrophile permet de prolonger la durée d'apparition de la pellicule, tout en conservant un étalement correct de la composition 14 sur la lame 18. L'angle de contact α obtenu entre la lame 18 et la composition 14 présente en effet une valeur inférieure à 20°, de préférence inférieure à 1 ° et 10°, de préférence encore de l'ordre du degré.

Le polymère hydrophile entraîne également une diminution de l'épaisseur de la pellicule obtenue lors de l'évaporation de la composition 14, ce qui permet de détecter des particules 24 de taille plus réduite, tout en conservant un bon rapport signal sur bruit. En effet, si l'épaisseur de la pellicule est trop importante par rapport aux particules 24 que l'on souhaite détecter, alors le rapport signal sur bruit décroît.

Lorsque le surfactant présente une concentration au moins égale à la concentration micellaire critique, la composition 14 s'étale encore mieux, tout en présentant une vitesse d'évaporation suffisante pour permettre la formation de la pellicule.

Le système de détection 22 permet alors de détecter des particules 24 présentant un diamètre de très faible valeur, comme par exemple des particules présentant un diamètre de 200 nm.

## Revendications

1. Procédé de formation d'un film liquide sur un support (10), le procédé comprenant les étapes suivantes :
- le placement (50) du support (10) dans une enceinte (12), et le dépôt d'une composition (14) sur le support (10), la composition (14) comportant de l'eau,
- l'introduction (55) d'un liquide volatile (16) dans l'enceinte (12), et
- la fermeture (60) de l'enceinte (12) pendant une durée prédéterminée, le liquide volatile (16) s'évaporant dans l'enceinte (12) lors de cette étape de fermeture (60),
le procédé étant **caractérisé en ce qu'**il comprend en outre l'étape suivante :
- l'extraction (65), en dehors de l'enceinte (12), au moins partiellement de la vapeur formée par l'évaporation du liquide volatile (16), cette extraction (65) produisant un étalement de la composition (14) sur le support (10), ladite composition étalée (14) formant alors le film liquide sur le support (10).

2. Procédé selon la revendication 1, dans lequel la durée prédéterminée présente une valeur comprise entre 1 minute et 30 minutes, de préférence comprise entre 5 minutes et 20 minutes, de préférence encore sensiblement égale à 10 minutes.

3. Procédé selon la revendication 1 ou 2, dans lequel lors de l'introduction (55) du liquide volatile (16), le liquide volatile (16) est disposé à l'écart de la composition (14), en l'absence d'un contact entre le liquide volatile (16) et la composition (14).

4. Procédé selon l'une quelconque des revendications précédentes, dans lequel le liquide volatile (16) introduit dans l'enceinte (12) comporte un alcool, tel que de l'éthanol.

5. Procédé selon l'une quelconque des revendications précédentes, dans lequel l'enceinte (12) est une boîte (26), telle qu'une boîte de Petri, la boîte (26) comportant un couvercle (28) et un réceptacle (30) présentant une ouverture (32), le couvercle (28) étant mobile entre une position ouverte dans laquelle le couvercle (28) est à l'écart de l'ouverture (32) du réceptacle et une position fermée dans laquelle le couvercle (28) est propre à obturer l'ouverture (32) du réceptacle, ladite position fermée correspondant à une fermeture hermétique de la boîte (26), et
dans lequel, lors de l'étape de fermeture (60), le couvercle (28) est déplacé de sa position ouverte vers sa position fermée, puis maintenu en position fermée pendant la durée prédéterminée, et lors de l'étape d'extraction (65), le couvercle (28) est déplacé de sa position fermée vers sa position ouverte, puis maintenu en position ouverte.

6. Procédé selon la revendication 5, dans lequel le réceptacle (30) comporte un fond (31), le liquide volatile (16) est disposé contre le fond (31) lors de l'étape d'introduction (55), et la boite (26) comporte en outre au moins une cale (33) de maintien du support (10) à l'écart du fond (31), afin de disposer le liquide volatile (16) à l'écart de la composition (14) lors de l'étape d'introduction (55).

7. Procédé selon l'une quelconque des revendications précédentes, dans lequel la composition (14) comprend en outre des particules (24), un surfactant et un polymère hydrophile, les particules (24) présentant un diamètre de préférence inférieur à 10 µm, de préférence encore inférieur à 1 µm, le surfactant présentant une concentration de préférence au moins égale à la concentration micellaire critique, et le polymère hydrophile présentant une température d'ébullition supérieure à celle de l'eau,
le polymère étant de préférence un polyéthylène glycol défini par la formule suivante :
H(-OCH₂CH₂-)ₙOH
où n représente le nombre de motif(s) d'oxyéthylène du polymère.

8. Procédé selon l'une quelconque des revendications précédentes, dans lequel la composition (14) présente un volume de valeur comprise entre 0,5 µL et 5 µL.

9. Procédé selon l'une quelconque des revendications précédentes, dans lequel le support (10) est réalisé en un matériau hydrophile, tel que du verre ou encore tel qu'un matériau plastique.

10. Procédé selon l'une quelconque des revendications précédentes, dans lequel le support (10) est une lame transparente (18), la lame transparente (18) étant destinée à être éclairée par une source lumineuse (20), en vue de l'acquisition, à l'aide d'un système de détection optique (22), d'au moins une image de la composition (14) comprenant des particules (24).

11. Procédé selon l'une quelconque des revendications précédentes, dans lequel la composition (14) comprend en outre des particules (24), les particules (24) étant des espèces biologiques, telles que des espèces biologiques vivantes, par exemple des bactéries.

## Patentansprüche

1. Verfahren zur Bildung eines flüssigen Films auf einem Träger (10), wobei das Verfahren die folgenden Schritte umfasst:
- das Platzieren (50) des Trägers (10) in einem Gehäuse (12) und das Aufbringen einer Zusammensetzung (14) auf dem Träger (10), wobei die Zusammensetzung (14) Wasser beinhaltet,
- das Einführen (55) einer flüchtigen Flüssigkeit (16) in das Gehäuse (12) und
- das Schließen (60) des Gehäuses (12) für eine vorbestimmte Dauer, wobei die flüchtige Flüssigkeit (16) in dem Gehäuse (12) während dieses Schrittes des Schließens (60) verdampft,
wobei das Verfahren **dadurch gekennzeichnet ist, dass** es des Weiteren den folgenden Schritt umfasst:
- die Extraktion (65), außerhalb des Gehäuses (12), mindestens teilweise, des Dampfes, der durch die Verdampfung der flüchtigen Flüssigkeit (16) gebildet wurde, wobei diese Extraktion (65) eine Ausbreitung der Zusammensetzung (14) auf dem Träger (10) erzeugt, wobei die ausgebreitete Zusammensetzung (14) den flüssigen Film auf dem Träger (10) formt.

2. Verfahren gemäß Anspruch 1, wobei die vorbestimmte Dauer einen Wert zwischen 1 Minute und 30 Minuten darstellt, vorzugsweise zwischen 5 Minuten und 20 Minuten, noch bevorzugter ziemlich genau 10 Minuten.

3. Verfahren gemäß Anspruch 1 oder 2, wobei während der Einführung (55) der flüchtigen Flüssigkeit (16) die flüchtige Flüssigkeit (16) abseits von der Zusammensetzung (14) angeordnet ist, ohne Kontakt zwischen der flüchtigen Flüssigkeit (16) und der Zusammensetzung (14).

4. Verfahren gemäß einem der voranstehenden Ansprüche, wobei die flüchtige Flüssigkeit (16), die in das Gehäuse (12) eingeführt wird, Alkohol beinhaltet, wie Ethanol.

5. Verfahren gemäß einem der voranstehenden Ansprüche, wobei das Gehäuse (12) ein Kasten (26) ist, wie eine Petrischale, wobei der Kasten (26) einen Deckel (28) und einen Aufnahmebehälter (30) aufweisend eine Öffnung (32) beinhaltet, wobei der Deckel (28) beweglich ist zwischen einer geöffneten Position, in der der Deckel (28) abseits der Öffnung (32) des Aufnahmebehälters ist, und einer geschlossenen Position, in der der Deckel (28) geeignet ist, die Öffnung (32) des Aufnahmebehälters zu verschließen, wobei die geschlossene Position einer hermetischen Abriegelung des Kastens (26) entspricht, und
wobei, während des Schrittes des Schließens (60), der Deckel (28) von seiner geöffneten Position hin zu seiner geschlossenen Position versetzt, hiernach in der geschlossenen Position über die vorbestimmte Dauer gehalten wird, und, während des Schrittes der Extraktion (65), der Deckel (28) von seiner geschlossenen Position hin zu seiner geöffneten Position versetzt und dann in der geöffneten Position gehalten wird.

6. Verfahren gemäß Anspruch 5, wobei der Aufnahmebehälter (30) einen Boden (31) beinhaltet, wobei die flüchtige Flüssigkeit (16) während des Schrittes der Einführung (55) gegen den Boden (31) angeordnet wird, und der Kasten (26) des Weiteren mindestens einen Keil (33) zum Fernhalten des Trägers (10) vom Boden (31) beinhaltet, um die flüchtige Flüssigkeit (16) während des Schrittes der Einführung (55) abseits der Zusammensetzung (14) anzuordnen.

7. Verfahren gemäß einem der voranstehenden Ansprüche, wobei die Zusammensetzung (14) des Weiteren Partikel (24), ein Tensid und ein hydrophiles Polymer umfasst, wobei die Partikel (24) einen Durchmesser von vorzugsweise weniger als 10 µm, noch bevorzugter weniger als 1 µm aufweisen, des Tensid eine Konzentration von vorzugsweise mindestens gleich der kritischen Mizellenkonzentration aufweist und das hydrophile Polymer eine Siedetemperatur höher als die von Wasser aufweist,
wobei das Polymer vorzugsweise ein Polyethylenglycol definiert durch die folgende Formel ist: H(-OCH₂CH₂-)ₙOH
wobei n die Anzahl des/der Oxyethylen-Motive des Polymers repräsentiert.

8. Verfahren gemäß einem der voranstehenden Ansprüche, wobei die Zusammensetzung (14) ein Volumen zwischen 0,5 µl und 5 µl hat.

9. Verfahren gemäß einem der voranstehenden Ansprüche, wobei der Träger (10) aus einem hydrophilen Material, wie Glas oder wie einem Kunststoffmaterial, hergestellt ist.

10. Verfahren gemäß einem der voranstehenden Ansprüche, wobei der Träger (10) eine transparente Platte (18) ist, wobei die transparente Platte (18) dazu bestimmt ist, durch eine Lichtquelle (20) beschienen zu werden, zwecks Gewinnung, mit Hilfe eines optischen Erfassungssystems (22), mindestens einer Abbildung der Zusammensetzung (14) umfassend Partikel (24).

11. Verfahren gemäß einem der voranstehenden Ansprüche, wobei die Zusammensetzung (14) des Weiteren Partikel (24) umfasst, wobei die Partikel (24) biologische Spezies sind, wie lebende biologische Spezies, beispielsweise Bakterien.

## Claims

1. A method for forming a liquid film on a substrate (10), the method comprising the following steps:
- placing (50) the substrate (10) in a chamber (12), and depositing a composition (14) on the substrate (10), the composition (14) including water,
- introducing (55) a volatile liquid (16) into the chamber (12), and
- closing (60) the chamber (12) for a predetermined period, the volatile liquid (16) evaporating in the chamber (12) during this closing step (60),
the method being **characterized in that** it further comprises the following step:
- at least partly extracting (65), out of the chamber (12), vapor formed by the evaporation of the volatile liquid (16), this extraction (65) producing a spreading out of the composition (14) on the support (10), said spread composition (14) then forming the liquid film on the substrate (10).

2. The method according to claim 1, wherein the predetermined period has a value comprised between 1 minute and 30 minutes, preferably comprised between 5 minutes and 20 minutes, still preferably substantially equal to 10 minutes.

3. The method according to claim 1 or 2, wherein, during the introduction (55) of the volatile liquid (16), the volatile liquid (16) is positioned away from the composition (14), in the absence of any contact between the volatile liquid (16) and the composition (14).

4. The method according to any of the preceding claims, wherein the volatile liquid (16) introduced into the chamber (12) includes an alcohol, such as ethanol.

5. The method according to any of the preceding claims, wherein the chamber (12) is a box (26), such as a Petri dish, the box (26) including a lid (28) and a receptacle (30) having an aperture (32), the lid (28) being movable between an open position in which the lid (28) is away from the aperture (32) of the receptacle and a closed position in which the lid (28) is able to obturate the aperture (32) of the receptacle, said closed position corresponding to hermetically closing the box (26), and
wherein, during the closing step (60), the lid (28) is moved from its open position to its closed position, and then maintained in a closed position for the predetermined period, and during the extraction step (65), the lid (28) is moved from its closed position to its open position, and then maintained in an open position.

6. The method according to claim 5, wherein the receptacle (30) includes a bottom (31), the volatile liquid (16) is positioned against the bottom (31) during the introduction step (55), and the box (26) further includes at least one shim (33) for maintaining the substrate (10) away from the bottom (31), in order to position the volatile liquid (16) away from the composition (14) during the introduction step (55).

7. The method according to any of the preceding claims, wherein the composition (14) further comprises particles (24), a surfactant and a hydrophilic polymer, the particles (24) having a diameter preferably less than 10 µm, still preferably less than 1 µm, the surfactant having a concentration preferably at least equal to the critical micellar concentration, and the hydrophilic polymer having a boiling temperature above that of water,
the polymer preferably being a polyethylene glycol defined by the following formula:
H(-OCH₂CH₂-)ₙOH
wherein n represents the number of oxyethylene unit(s) of the polymer.

8. The method according to any of the preceding claims, wherein the composition (14) has a volume with a value comprised between 0.5 µl and 5 µl.

9. The method according to any of the preceding claims, wherein the substrate (10) is made in a hydrophilic material, such as glass or further such as a plastic material.

10. The method according to any of the preceding claims, wherein the substrate (10) is a transparent slide (18), the transparent slide (18) being intended to be illuminated by a light source (20), for acquiring, by means of an optical detection system (22), at least one image of the composition (14) comprising particles (24).

11. The method according to any of the preceding claims, wherein the composition (14) further comprises particles (24), the particles (24) being biological species, such as live biological species, for example bacteria.
